# EUROPÄISCHE PATENTSCHRIFT

(11) **EP 0 649 500 B1**
(45) Veröffentlichungstag und Bekanntmachung des Hinweises auf die Patenterteilung: **29.01.1997**
(21) Anmeldenummer: 93915773.1
(22) Anmeldetag: 02.07.1993
(51) Int. Cl.: F15B 1/14, E03D 3/10

(54) **WC-SPÜLSYSTEM MIT MEHRMEMBRANENSPEICHER**
WC-FLUSHSYSTEM WITH MULTI-DIAPHRAGM STORE
SYSTEME DE CHASSE POUR WC AVEC ACCUMULATEUR MULTIMEMBRANE

(30) Priorität: 09.07.1992 DE 4222502
(43) Veröffentlichungstag der Anmeldung: 26.04.1995
(73) Patentinhaber: HYDAC TECHNOLOGY GMBH, D-66280 Sulzbach (DE)
(72) Erfinder: SCHÖN, Otmar, D-66450 Bexbach-Höchen (DE)
(74) Vertreter: Bartels, Martin Erich Arthur
(86) Internationale Anmeldenummer: EP9301708
(87) Internationale Veröffentlichungsnummer: WO9401680

(56) Entgegenhaltungen:
- BE-A- 666 221
- DE-A- 1 525 730
- DE-A- 3 021 829
- FR-A- 947 655
- FR-A- 2 529 290
- GB-A- 1 108 551
- GB-A- 1 158 436
- US-A- 2 540 676
- US-A- 2 638 932

## Beschreibung

Die Erfindung betrifft ein WC-Spülsystem zur Verminderung des Frischwasserbedarfs bei Toiletten, mit einer mittels einer Ventilanordnung absperrbaren Frischwasserzuführung, die an einen Hydrospeicher angeschlossen ist, der mit Frischwasser befüllbar ist, das über eine mittels der Ventilanordnung absperrbare Versorgungsleitung an die Toilette abgebbar ist und der ein Speichergehäuse aufweist, in dem mittels einer Trennmembran zwei Teilräume für die Aufnahme von voneinander zu trennendem Gas und Frischwasser gebildet sind.

Ein gattungsgemäßes WC-Spülsystem ist durch die DE-A-26 34 248 vorbekannt. Bei diesem bekannten WC-Spülystem ist der Hydro- oder Druckspeicher mit nur einer Membran von der Fluidseite her an eine Kalt- und eine Warm-Frischwasserzuführung angeschlossen und mit dahingehendem Frischwasser befüllbar, das er bei entsprechender Schaltstellung der Ventilanordnung für einen Spül- oder Reinigungsvorgang an eine Sanitäreinrichtung abgibt. Auf der Gasseite des Hydrospeichers, der von der Fluidseite über die elastische Trennmembran aus Kunststoff oder Gummi getrennt ist, ist ein Gaspolster aus Stickstoff oder Luft mit einer Vorspannung vorhanden, das bei einem Spülvorgang den Vorspannungsdruck an die Fluidseite abgibt, so daß mit hohem Druck der Spülvorgang veranlaßt wird und bei zumindest gleich gutem Reinigungsergebnis gegenüber konventionellen Toilettenspülsystemen eine geringere Frischwassermenge benötigt wird.

Trotz dieses Vorteiles der Verminderung des Frischwasserbedarfs kommt es bei dieser bekannten WC-Spüleinrichtung bei auftretenden Druckspitzen aufgrund von Wasserdruckschwankungen im Netz, die unter dem statischen Druck liegen, zu Druckschwankungen am Ende des Spülvorganges, die eine gezielte und gründliche Reinigung insbesondere bei noch weiter herabgesetzter Spülwassermenge nicht mehr gewährleisten. So sind kurze Auffüllzeiten ohne Übertragung von Druckspitzen in das Wassernetz bei dem bekannten WC-Spülsystem nicht erreichbar und darüber hinaus ist für das Erzeugen der Vorspannung über die Trennmembran mittels des Gaspolsters ein groß aufbauender Hydrospeicher notwendig, was einem platzsparenden Einbau in WC-Spülsystemen entgegensteht.

Bei einem gattungsfremden bekannten WC-Spülsystem nach der DE-A-35 36 967 ist als Flüssigkeitsspeicher ein Zylinder vorgesehen mit einem in ihm bewegbaren Kolben, der den Zylinder derart in zwei Flüssigkeitsräume, die mit Frischwasser befüllbar sind, unterteilt, daß bei einer Hin- und Herbewegung des Kolbens bei normalem Umgebungsdruck für einen Spülzyklus zwei Spülvorgänge mit derselben Wassermenge erfolgen, wobei mit dem Ausschub der einen Wasserteilmenge mittels des Kolbens aus dem Zylinder der andere Zylinderteilraum mit Wasser gleichzeitig befüllt wird. Zwar wird auch hier, indem der Spülzyklus zwei zeitlich nacheinander ablaufende Spülvorgänge umfaßt, mit denen je eine Spülwasserteilmenge der zu spülenden Einrichtung funktionsgerecht zugeführt werden, ein verbessertes Spülergebnis erreicht, bei gleichzeitig reduzierter Baugröße des Spülaggregates in Form des Zylinders mit dem Kolben; dennoch ist aufgrund des zweifachen Spülzyklus eine große Frischwassereinsatzmenge notwendig.

Bei einem weiteren gattungsfremden bekannten WC-Spülsystem gemäß der EP-A-0 430 521 wird zum Erzeugen des Spüldruckes für einen Spülvorgang eine elastisch nachgiebige Membran in der Art eines Ballons aufgebläht, in dem Frischwasser der Membranblase zugeführt wird, die dann anschließend für einen Spülvorgang unter dem Druck der beim Zusammenziehen der elastischen Membranblase entsteht, die aufgenommene Frischwassermenge wieder abgibt. Bei einer anderen Ausführungsform dieses bekannten WC-Spülsystemes wird die Vorspannung über eine Druckfeder erreicht, die bei einem Auslösevorgang zum Spülen sich schlagartig entspannt und unter ihrer Federvorspannung einen Kolben in einem Zylinder bewegt, der die vorher in dem Zylinder bevorratete Wassermenge für den Spülvorgang austreibt. Dieses bekannte WC-Spülsystem ist kompliziert aufgebaut und damit teuer in der Herstellung. Im übrigen reichen die erzielbaren Vorspannungen mittels der Membranblase und der Druckfeder nicht aus, einen derart hohen Spüldruck zu erzeugen, daß mit einer minimalen Wassereinsatzmenge ein gutes Reinigungsergebnis möglich wäre.

Hydrospeicher mit einem Speichergehäuse, das mittels zweier Trennmembranen in drei Teilräume unterteilt ist, wobei der von den beiden Trennmembranen eingeschlossene Teilraum der Aufnahme des Gases dient und die beiden anderen Teilräume für die Aufnahme eines Fluides in Form von Wasser oder Hydrauliköl vorgesehen sind, sind in einer Vielzahl von Ausführungsformen (DE-A-1 525 730, DE-A-3 021 829 und BE-A-666 221) der Fachwelt bekannt. Diese bekannten Hydrospeicher stellen eine Art Druckausdehnungs- oder Kompensationsgefäß dar und führen über das eingeschlossene Gasdruckpolster einen Druck- und/oder Temperaturausgleich im Fluidkreislauf herbei, an den der jeweilige Hydrospeicher von seinen beiden endseitig angeordneten Fluidräumen her angeschlossen ist. Ferner können in dem Fluidnetz auftretende Pulsationen gedämpft werden. Bei einer anderen Art dieser bekannten Hydrospeicher mit zwei Trennmembranen (FR-A-2 529 290) wird eine zwischen den beiden Trennmembranen geführte Fluidmenge durch pulsationsartiges Aufbringen von gleichzeitigen Gasdruckstößen in den beiden anderen Teilräumen, die von den Trennmembranen begrenzt sind, angetrieben. Diese Art eines Hydrospeichers stellt also eine Art Fluidpumpe dar, die besonders schonend und pulsierend das Fluid transportieren kann.

Ausgehend von diesem Stand der Technik liegt der Erfindung die Aufgabe zugrunde, ein WC-Spülsystem zu schaffen, der ein breiteres Einsatzspektrum aufweist. Diese Aufgabe löst ein WC-Spülsystem mit der Gesamtheit der Merkmale des Anspruches 1.

Dadurch, daß bei dem WC-Spülsystem gemäß dem kennzeichnenden Teil des Anspruches 1 vorgesehen ist, daß eine weitere Trennmembran in dem Speichergehäuse angeordnet ist, die einen weiteren Teilraum für die Aufnahme mindestens eines Mediums begrenzt, daß der von den beiden Trennmembranen eingeschlossene Teilraum der Aufnahme des Gases dient und daß in einer Schaltstellung der Ventilanordnung ein Teilraum mit Frischwasser befüllbar ist, das an die Toilette in einer anderen Schaltstellung abgebbar ist, bei der der weitere Teilraum gleichzeitig das jeweilige Medium aufnimmt, hat es sich gezeigt, daß alle auftretenden Druckspitzen aufgrund von Wasserdruckschwankungen und Druckschwankungen am Ende des Spülvorganges vermieden sind. So sind erfindungsgemäß kurze Auffüllzeiten ohne negative Übertragung von Druckspitzen in das Wassernetz erreichbar. Trotz eines relativ geringen Gasvolumens des Speichers sinkt der Gasdruck nicht unter den Fließdruck und der Gasdruck des Speichers ist während des gesamten Spülvorganges größer als der Druck bei einem identischen Speicher mit nur einer Membran. So lassen sich kurze Spülzeiten bei hohem Druck erreichen, was nur geringe Einsatzmengen an Frischwasser voraussetzt, was wiederum der Umwelt zugute kommt. In Abhängigkeit von der vorgebbaren Menge an gasförmigem Medium innerhalb des Raumes zwischen den beiden Trennmembranen und der Druckänderung im System, ist eine genaue Einstellung oder Dosierung der abzugebenden Fluidmenge aus dem Hydrospeicher gegenüber den bisher bekannten Lösungen gewährleistet.

Bei einer bevorzugten Ausführungsform des erfindungsgemäßen WC-Spülsystemes ist das in dem weiteren Teilraum jeweils aufnehmbare Medium Frischwasser aus der Frischwasserzuführung, Preßluft einer Preßlufteinrichtung oder von einer Fluidpumpe gefördertes Fluid, insbesondere Hydrauliköl. Sofern beide Teilräume mit Frischwasser abwechselnd befüllt werden, stehen diese Mengen für einen neuen Spülvorgang bereit.

Bei einer weiteren bevorzugten Ausführungsform ist die jeweilige Trennmembran schalenartig ausgebildet und mit ihrem Längsrand umfangsseitig mit dem Speichergehäuse dichtend verbunden. Hierdurch ist die jeweilige Trennmembran sicher im Speichergehäuse festgelegt, so daß sie auch schlagartigen Beanspruchungen standhält.

Bei einer weiteren bevorzugten Ausführungsform des erfindungsgemäßen Hydrospeichers münden fluidführende Leitungen an einem Ende des Speichergehäuses in die fluidführenden Teilräume, die am anderen Ende des Speichergehäuses über jeweils eine Entlüftungsleitung wiederum an die fluidführenden Leitungen angeschlossen sind. Durch die tiefergelegten Öffnungen für die Spülleitungen wird eine vollständige Entleerung bei waagerechtem Einbau des Speichers sichergestellt. Durch die Entluftungsleitungen, die vorzugsweise im Querschnitt dünn gehalten sind, läßt sich eine Ansammlung von in dem Fluid mitgeführtem Gas oder gasförmigen Medien in den fluidführenden Kammern verhindern. Die bei einem Befüllvorgang des Hydrospeichers mit dem Fluid mitgeführte Luft wird zu Beginn jeder Fluidabgabe an die fluidführenden Leitungen über die jeweilige Entlüftungsleitung abgegeben und mithin aus dem Hydrospeicher abgeführt.

Bei einer besonders bevorzugten Ausführungsform des erfindungsgemäßen Hydrospeichers ist zwischen den jeweiligen Trennmembranen und dem Speichergehäuse eine starre Begrenzungswand oder Trennschicht mit Durchlässen vorhanden. Aufgrund dieser Anordnung ist eine Abgabe von etwaig im Fluid befindlichem Gas oder gasförmigen Medien im Speicher in jeder beliebigen Einbaulage desselben möglich, ohne daß Funktionseinschränkungen auftreten. Ferner ist eine vollständige Entleerung des Speichers bei beliebiger Einbaulage und beliebiger Anordnung der Auslaßöffnung erreicht.

Im folgenden ist der Hydrospeicher in prinzipieller Darstellung anhand der Zeichnung näher erläutert.

Es zeigen:
- Fig.1, 2 und 6: im Querschnitt verschiedene Ausführungsformen des Hydrospeichers;
- Fig. 3: den an ein stationäres Wassernetz angeschlossenen Hydrospeicher;
- Fig.4 und 5: einen mit Preßluft bzw. mit Hydrauliköl beaufschlagbaren Hydrospeicher, angeschlossen an einen WC-Spülkreislauf.

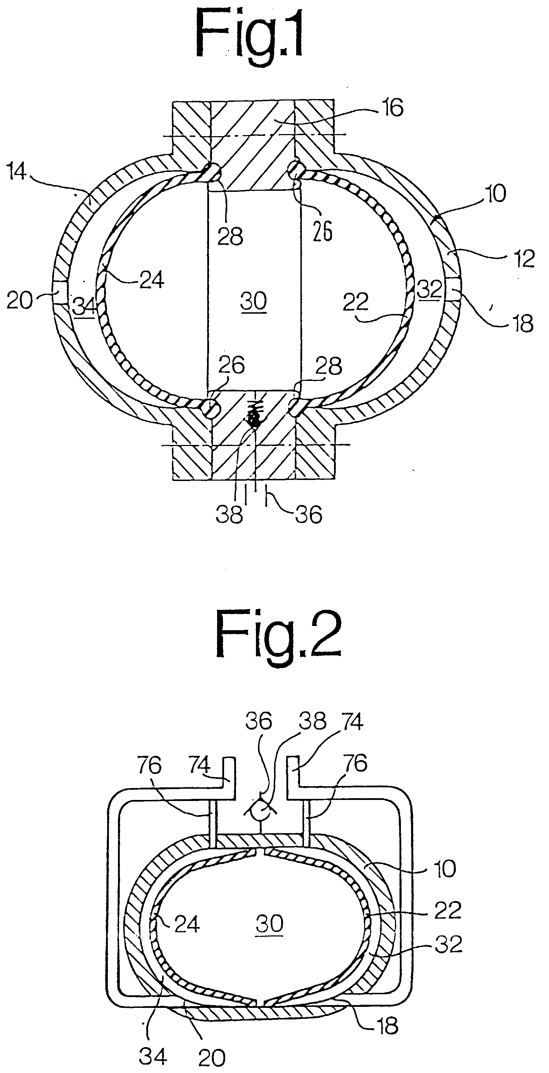

Der in der Fig.1 dargestellte Hydrospeicher weist ein als Ganzes mit 10 bezeichnetes Speichergehäuse auf, das im wesentlichen aus zwei schalenartigen Hälften 12 und 14 gebildet ist, die über einen Mittelring 16 miteinander fest verbunden sind. Zum Herstellen dieser festen Verbindung durchgreifen Zuganker (nicht dargestellt) entlang den in der Fig.1 dargestellten Strichlinien die beiden flanschartigen Enden der Hälften 12 und 14 sowie den Mittelring 16. In den Seitenwänden der schalenartigen Hälften 12 und 14 sind in gleicher Höhe einander gegenüberliegend zwei Durchlässe 18 und 20 vorhanden.

Innerhalb des Speichergehäuses 10 befinden sich zwei einander gegenüberliegend angeordnete schalenartige Trennmembranen 22 und 24, die mit ihrem wulstartigen Längsrand 26 umfangsseitig mit dem Speichergehäuse 10 dichtend verbunden sind, indem die Längsränder 26 teilweise in einer Radialausnehmung 28 des Mittelringes 16 mit den flanschartigen Enden der Hälften 12 und 14 festgeklemmt sind. Die beiden Trennmembranen 22 und 24 begrenzen einen ersten inneren Teilraum 30 sowie mit dem jeweils ihnen benachbart gegenüberliegenden Innenumfang der beiden Schalenhälften 12 und 14 des Speichergehäuses 10 einen zweiten bzw. dritten äußeren Teilraum 32,34. Die Trennmembranen 22,24 sind aus einem für Hydrospeicher üblichen Material gebildet, insbesondere aus gummielastischem Material, das die jeweiligen Teilräume 30,32 und 34 flüssigkeits- und gasdicht voneinander abtrennt. Die Befestigung der jeweiligen Membran kann auch in anderer Weise erfolgen, beispielsweise mittels einer Klemmverbindung über einen Befestigungs- und Zentrierring.

Die beiden Trennmembranen 22 und 24 können längs ihren Rändern 26 miteinander unmittelbar verbunden sein, wobei die Übergänge bündig abschließen, so daß eine Art Speicherblase (nicht dargestellt) gebildet ist, die längs ihres Außenumfanges mit dem Speichergehäuse 10 dichtend verbunden ist. Abhängig vom Einsatzzweck und Anwendungsfall des Hydrospeichers sind die jeweiligen Teilräume 30,32 und 34 für die Aufnahme eines Fluides oder Gases vorgesehen. Für das Einfüllen eines Gases oder Fluides in den Teilraum 30, der von den beiden Trennmembranen 22 und 24 umschlossen ist, ist eine Anschlußstelle 36 mit federbelastetem Rückschlagventil 38 vorgesehen, das ein unbeabsichtigtes Rückströmen aus dem Teilraum 30 zur Anschlußstelle 36 verhindert.

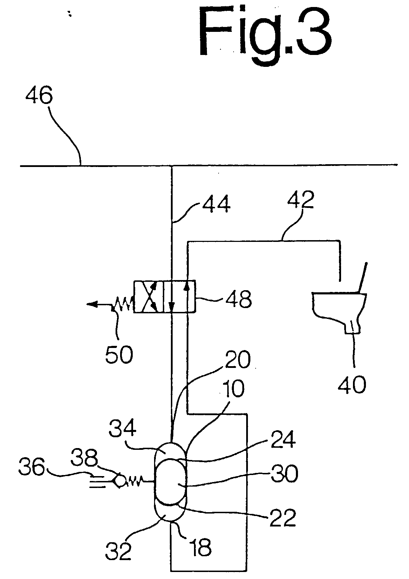

Der in der Fig.1 gezeigte Speicher kann gemäß den Fig.3 bis 5, die eine sanitäre Einrichtung in Form einer Toilette 40 zeigen, eingesetzt werden. Zum Zuführen einer Frischwassermenge ist die Toilette 40 an eine absperrbare Versorgungsleitung 42 angeschlossen. In dieser Versorgungsleitung weisen alle Ausführungsformen eines WC-Spülsystemes eine absperrbare Frischwasserzuführung 44 auf. Diese Frischwasserzuführung 44 ist an den Hydrospeicher gemäß der Fig.1 angeschlossen. Bei der Ausführungsform gemäß der Fig.3 ist die Frischwasserzuführung 44 an die Leitung 46 eines stationären Wassernetzes angeschlossen. Zwischen der Frischwasserzuführung 44 und dem Hydrospeicher sowie zwischen diesem und der Versorgungsleitung 42 ist ein 4/2-Wege-Ventil 48 geschaltet, das mit einer Art Ratsche 50 versehen ist. Der auch als Mehrkammer-Membranspeicher bezeichenbare Hydrospeicher mit seinen beiden Trennmembranen 22 und 24 weist in der Fig.3 eine im Uhrzeigersinn um 90° versetzte Einbaulage gegenüber der Fig.1 auf. Über den oberen Durchlaß 20 mündet in den oberen Teilraum 34 die Zuführleitung 44, wohingegen in den unteren Teilraum 32 über den Durchlaß 18 die Versorgungsleitung 42 mündet. Die Einbaulage des Speichers ist bei der Anwendung in WC-Spülsystemen hierauf jedoch nicht beschränkt.

Der mittlere Teilraum 30 wird über ein Gasventil in Form des Rückschlagventiles 38 von außen her über die Anschlußstelle 36 mit einem gasförmigen Medium, beispielsweise Luft, befüllt. Je größer der Vorfülldruck im mittleren Raum 30 ist, der über die Anschlußstelle 36 und das Rückschlagventil 38 zugeführt wird, um so geringer wird bei gleichem Systemdruck das mögliche Füllvolumen des Membranspeichers mit Frischwasser. Bei einem sehr hohen Druck kann es vorgesehen sein, daß die Spülung nur dann betätigbar ist, wenn der Toilettendeckel verschlossen und/oder in der geschlossenen Stellung verriegelt ist. Auch ist ein Spülvorgang denkbar, der erst vonstatten geht, wenn die Bedienperson den Raum mit der Toilette verlassen hat. Es kann auch ein einstellbares Gasventil (nicht dargestellt) vorgesehen sein, das noch nach Einbau des Hydrospeichers eine Variierung des Volumens im mittleren Raum 30 des Membranspeichers zuläßt.

Die Vorrichtung gemäß der Darstellung in der Fig.3 funktioniert nun wie folgt. Bei der dort dargestellten Schaltstellung des Wegeventiles 48 wird der obere Raum 34 des Membranspeichers über die Frischwasserzuführung 44 von seiten der Leitung 46 mit Frischwasser befüllt, wobei der Raum 34 sich vergrößert und'die Räume 30 und 32 sich im Volumen verringern. Sollten die beiden Membranen 22,24 längsverschiebbar angeordnet sein, können diese in der Fig.3 gesehen sich nach unten bewegen, so daß der freie Raum 32 von dem eingeschlossenen Volumen im Raum 30 ausgefüllt ist. Befindet sich der Membranspeicher in mit Frischwasser befülltem Zustand, kann über die Betätigungsanordnung 50 das Ventil 48 beispielsweise fußbetätigt geschaltet werden. Nun gelangt die Frischwassermenge von der Leitung 46 und die Frischwasserzuführung 44 in den unteren Raum 32 des Membranspeichers und befüllt diesen, so daß die Frischwassermenge im oberen Raum 34 unter Einwirken des Gasdruckes auf die Trennmembranen 22,24 über das Ventil 48 in die Versorgungsleitung 42 und damit in die Toilette 40 für einen Spülvorgang gedrückt wird. Nach Abschluß des Spülvorganges ist der Raum 32 mit Frischwasser gefüllt, der Raum 34 entleert und der Speicher ist für einen neuen Spülvorgang bereit, so daß gegebenenfalls auch mehrere Spülvorgänge unmittelbar hintereinander ablaufen können.

Es hat sich gezeigt, daß bei Einsatz des erfindungsgemäßen Hydrospeichers als Dosiersystem in WC-Spüleinrichtungen alle auftretenden Druckspitzen aufgrund von Wasserdruckschwankungen unter dem statischen Druck liegen und nur unbedeutende Druckschwankungen am Ende des Spülvorganges auftreten. So sind kurze Auffüllzeiten ohne Übertragung von Druckspitzen in das Wassernetz erreichbar. Trotz des relativ geringen Gasvolumens des Speichers sinkt der Gasdruck nicht unter den Fließdruck und der Gasdruck des Speichers ist während des gesamten Spülvorganges größer als der Druck bei einem identischen Speicher mit nur einer Membran. So lassen sich kurze Spülzeiten bei hohem Druck erreichen, was geringe Einsatzmengen an Frischwasser voraussetzt, was wiederum der Umwelt zugute kommt.

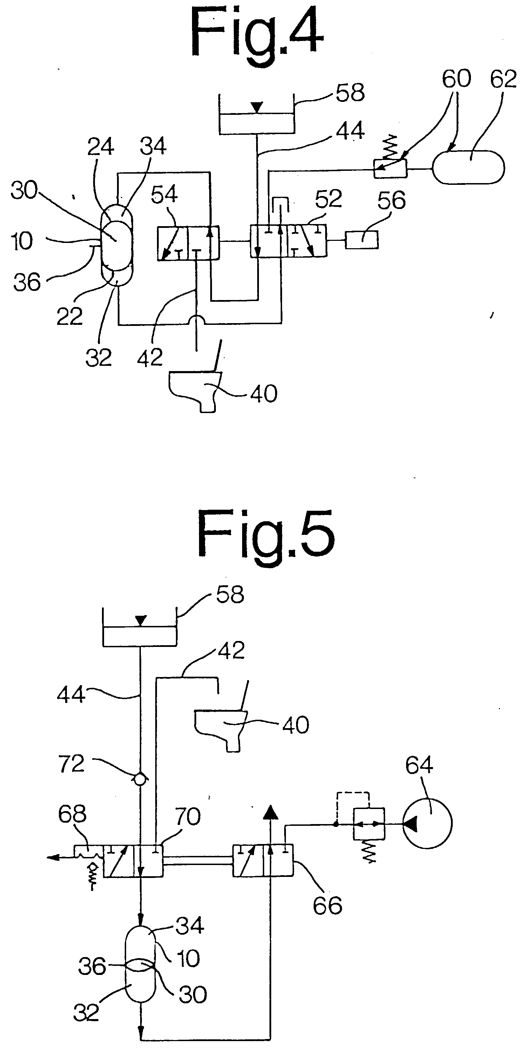

Bei der Ausführungsform eines WC-Spülsystemes gemäß der Fig.4 wird wiederum der Speicher nach der Fig.1 eingesetzt. Zum Absperren der Frischwasserzuführung 44 sowie der Versorgungsleitung 42 dient diesmal ein 5/2-Wege-Ventil 52 bzw. ein 3/2-Wege-Ventil 54. Beide Wegeventile 52 und 54 lassen sich über eine elektrische oder von Hand oder per Fußpedal betätigbare Schaltungsanordnung 56 synchron betätigen. Die Versorgungsleitung 44 für die Frischwasserzufuhr ist an einen Speichertank 58 angeschlossen und im übrigen ist eine als Ganzes mit 60 bezeichnete fahrzeugspezifische Preßlufteinrichtung vorhanden, wobei die Preßluft in einem Speicher 62 bevorratbar ist. Bei der in der Fig. 4 dargestellten Ausgangsstellung ist der Membranspeicher über die Ventilanordnung 52 und 54 sowie über die Frischwasserzuführung 44 mit dem Speichertank 58 verbunden und über diesen mit Frischwasser befüllt worden. Wird nun die Schaltungsanordnung 56 betätigt, gelangt Preßluft über den Speicher 62 der Preßlufteinrichtung 60 in den unteren Raum 32 des Speichers und verdrängt die Frischwassermenge im oberen Raum 34, die dann über das Ventil 54 unter Druck in die Toilette 40 für einen Spülvorgang gelangt. Nach Abschluß des Spülvorganges nimmt die Ventilanordnung 52,54 wieder ihre in der Fig.4 dargestellte Ausgangsstellung ein und ein neuer Füllvorgang mit Frischwasser beginnt. Hierdurch ergibt sich eine doppelte Sicherheit des Systems.

Bei der Ausführungsform gemäß der Fig.5 findet eine Fluidpumpe 64 Verwendung, mittels deren ein Fluid, beispielsweise Hydrauliköl, in einer betätigten Stellung des 3/2-Wege-Ventiles 66 in den unteren Raum 32 des Speichers förderbar ist. Der Membranspeicher ist wiederum wie der Speicher gemäß der Fig.1 ausgebildet. Bei der in der Fig.5 gezeigten Schaltstellung wird der Speicher durch Schwerkrafteinfluß befüllt. Mit Schalten des Wegeventiles 66 findet ein Spannen des Gaskissens statt. Bei Erreichen eines vorgebbaren maximalen Druckes wird das Wegeventil 66 erneut in seine Ausgangsstellung zurückgebracht und das Schaltelement 68 mit 3/2-Wegeventil 70 wird freigegeben. Mit Schalten des Ventiles 70 wird der Spülvorgang ausgelöst. Danach wird das Ventil 70 wiederum in seine Ausgangsstellung verbracht und in dieser Lage mittels der Betätigungsvorrichtung 68 gesperrt, so daß ein erneutes Befüllen des Speichers vonstatten geht. Bei diesem Zyklus kann optimal Energie im Speicher gespeichert werden, welche dann kurzfristig entnommen werden kann. Zum Vorspannen reicht eine gering dimensionierte Pumpe 64 aus. Anstelle der Verwendung einer Pumpe kann die Versorgung auch über einen Anschluß an das vorhandene Bordnetz oder an eine Hydraulikanlage sichergestellt werden. Als Rückflußsicherung ist bei dem Ausführungsbeispiel gemäß der Fig.5 zwischen dem Speicher 58 und dem Wegeventil 70 ein Rückschlagventil 72 angeordnet. Anstelle des angesprochenen Mehrkammer-Membranspeichers kann auch ein Blasenspeicher mit randseitig am Speichergehäuse festgelegter Membran (nicht dargestellt) Verwendung finden, die dann die Funktion der jeweiligen Trennmembranen 22 und 24 übernimmt.

Die Fig.2 zeigt eine Weiterentwicklung des Hydrospeichers gemäß der Fig.1, wobei die geänderte Ausführungsform ebenfalls in WC-Spülsystemen Anwendung findet. Wie die Fig.2 zeigt, sind die Durchlässe 18,20 im Speichergehäuse 10 tiefer gelegt und fluidführende Leitungen 74 münden an diesem Ende des Speichergehäuses 10 über die Durchlässe 18 und 20 in die fluidführenden Teilräume 32 und 34. Am anderen oberen Ende des Speichergehäuses 10 sind über jeweils eine Entlüftungsleitung 76 die Teilräume 32 und 34 an die um das Speichergehäuse herumgelenkten Leitungen 74 angeschlossen. Bei der vorliegenden Ausführungsform ist die Anschlußstelle 36 mit dem Rückschlagventil 38 auf der Oberseite des Speichers angeordnet. Die in der Fig.2 gesehen rechte fluidführende Leitung 74 bildet die eigentliche Spülleitung, die an die Versorgungsleitung 42 gemäß den Fig.3 bis 5 anschließbar ist, wohingegen die andere Leitung 74 als Zuführleitung an die Frischwasserzuführung 44 angeschlossen ist.

Auch bei einer Einbaulage des Hydrospeichers, wie er in der Fig.2 dargestellt ist, ist über die Leitungen 74 eine vollständige Entleerung der Teilräume 32 und 34 des Speichers möglich, wobei die Entlüftungsleitungen 76 die mit dem Wasser mitgeführte Luft aus den Teilräumen 32 und 34 abführen, so daß die Trennmembranen 22 und 24 sich in Abhängigkeit von den herrschenden Druckverhältnissen im Speicher ungehindert bewegen können.

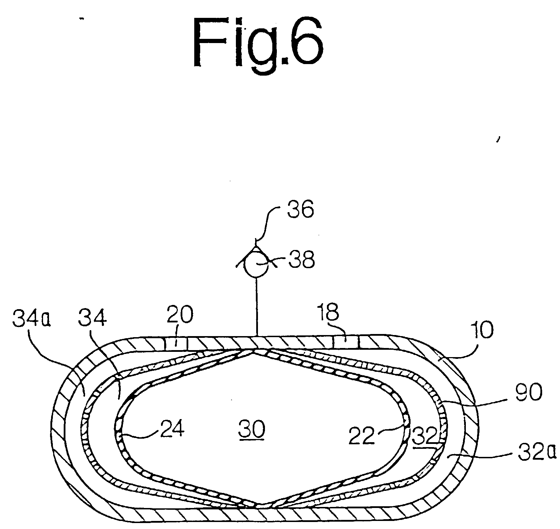

Fig.6 zeigt einen Hydrospeicher, bei dem die Spülleitung 74 gemäß dem Hydrospeicher nach der Fig.2 mit der dort gezeigten Entlüftung über die Entlüftungsleitungen 76 in dem Speichergehäuse 10 selbst integriert sind. Hierzu sind die beiden Durchlässe 18 und 20 auf der Oberseite des Speichergehäuses 10 angeordnet und zwischen dem Speichergehäuse 10 und den Trennmembranen 22 und 24 ist ein Lochblech 90 schalenartig eingesetzt, so daß Teilräume 32,32a und 34,34a gebildet sind. Das starre Lochblech 90 kann auch durch eine sonstige fluiddurchlässige, vorzugsweise unelastische Schicht gebildet sein (Raum 32a und 34a), ohne daß die Funktion beeinträchtigt wird. Mit dem gezeigten Prinzip ist ein Dosierspeicher verwirklicht, der eine beliebige Einbaulage einnehmen kann, ohne daß es zu Funktionsbeeinträchtigungen kommt, da ein Ansammeln von Luftmengen in den fluidführenden Kammern mit Sicherheit in jeder Einbaulage vermieden ist.

Will man die vorgebbare Volumenmenge des inneren Teilraumes 30 verändern, kann in diesen ein Ballon eingeführt sein, der je nach seinem Befüllungszustand mehr oder minder den Teilraum 30 ausfüllt. Die beschriebenen Trennmembranen brauchen nicht aus gummielastischem Material zu bestehen. Es genügt, wenn sie auftretende Drücke weiterleiten können. So könnten diese auch aus Blechmaterialien, bekannt von Aneoriddosen od.dgl., gebildet sein.

## Patentansprüche

1. WC-Spülsystem zur Verminderung des Frischwasserbedarfs bei Toiletten (40), mit einer mittels einer Ventilanordnung (48;52,54;66,70) absperrbaren Frischwasserzuführung (44), die an einen Hydrospeicher angeschlossen ist, der mit Frischwasser befüllbar ist, das über eine mittels der Ventilanordnung (48;52,54;66,70) absperrbare Versorgungsleitung (42) an die Toilette (40) abgebbar ist und der ein Speichergehäuse (10) aufweist, in dem mittels einer Trennmembran (24) zwei Teilräume (30,34) für die Aufnahme von voneinander zu trennendem Gas und Frischwasser gebildet sind, dadurch gekennzeichnet, daß eine weitere Trennmembran (22) in dem Speichergehäuse (10) angeordnet ist, die einen weiteren Teilraum (32) für die Aufnahme mindestens eines Mediums begrenzt, daß der von den beiden Trennmembranen (22,24) eingeschlossene Teilraum (30) der Aufnahme des Gases dient und daß in einer Schaltstellung der Ventilanordnung (48;52,54;66,70) ein Teilraum (34) mit Frischwasser befüllbar ist, das an die Toilette (40) in einer anderen Schaltstellung abgebbar ist, bei der der weitere Teilraum (32) gleichzeitig das jeweilige Medium aufnimmt.

2. WC-Spülsystem nach Anspruch 1, dadurch gekennzeichnet, daß das in dem weiteren Teilraum (32) jeweils aufnehmbare Medium Frischwasser aus der Frischwasserzuführung (44), Preßluft einer Preßlufteinrichtung (60) oder von einer Fluidpumpe (64) gefördertes Fluid, insbesondere Hydrauliköl, ist.

3. WC-Spülsystem nach Anspruch 1 oder 2, dadurch gekennzeichnet, daß die jeweilige Trennmembran (22,24) schalenartig ausgebildet ist und mit ihrem Längsrand (26) umfangsseitig mit dem Speichergehäuse (10) dichtend verbunden ist.

4. WC-Spülsystem nach einem der Ansprüche 1 bis 3, dadurch gekennzeichnet, daß fluidführende Leitungen (74) an einem Ende des Speichergehäuses (10) in die fluidführenden Teilräume (32,34) münden, die am anderen Ende des Speichergehäuses (10) über jeweils eine Entlüftungsleitung (76) wiederum an ihre fluidführenden Leitungen (74) angeschlossen sind.

5. WC-Spülsystem nach einem der Ansprüche 1 bis 4, dadurch gekennzeichnet, daß zwischen den jeweiligen Trennmembranen (22,24) und dem Speichergehäuse (10) eine starre Begrenzungswand (90) oder Trennschicht mit Durchlässen vorhanden ist.

## Claims

1. WC-flush system for reducing the freshwater requirement in toilets (40), with a freshwater supply (44) able to be shut off by means of a valve arrangement (48; 52, 54; 66, 70), which freshwater supply (44) is connected to a hydraulic accumulator, which can be filled with freshwater, which can be delivered to the toilet (40) by way of a supply line (42) able to be shut off by means of the valve arrangement (48; 52, 54; 66, 70) and which comprises an accumulator housing (10), in which by means of a separating diaphragm (24) two partial chambers (30, 34) are formed for receiving gas and freshwater to be separated from each other, characterised in that a further separating diaphragm (22) is located in the accumulator housing (10), which defines a further partial chamber (32) for receiving at least one medium, that the partial chamber (30) enclosed by the two separating diaphragms (22, 24) serves to receive gas and that in one switching position of the valve arrangement (48; 52, 54; 66, 70), a partial chamber (34) may be filled with freshwater, which can be delivered to the toilet (40) in another switching position, in which the further partial chamber (32) simultaneously receives the respective medium.

2. WC-flush system according to Claim 1, characterised in that the medium able to be received respectively in the other partial chamber (32) is freshwater from the freshwater supply (44), compressed air from a compressed air device (60) or fluid, in particular hydraulic oil, conveyed by a fluid pump (64).

3. WC-flush system according to Claim 1 or 2, characterised in that the respective separating diaphragm (22, 24) is constructed in the manner of a shell and is connected in a sealing manner by its longitudinal edge (26) peripherally to the accumulator housing (10).

4. WC-flush system according to one of Claims 1 to 3, characterised in that fluid-carrying lines (74) open at one end of the accumulator housing (10) into the fluid-carrying partial chambers (32, 34), which at the other end of the accumulator housing (10) are connected by way of respectively one vent line (76) once again to their fluid-carrying lines (74).

5. WC-flush system according to one of Claims 1 to 4, characterised in that provided between the respective separating diaphragms (22, 24) and the accumulator housing (10) is a rigid boundary wall (90) or separating layer with passages.

## Revendications

1. Système de chasse pour WC destiné à réduire les besoins d'eau non usée dans des toilettes (40), comprenant une amenée d'eau non usée (44), pouvant être coupée au moyen d'un dispositif de soupapes (48; 52, 54; 66, 70), qui est raccordée à un accumulateur hydraulique pouvant être rempli d'eau non usée qui peut être délivrée à la toilette (40) par le biais d'une conduite d'alimentation (42) pouvant être coupée au moyen du dispositif de soupapes (48; 52, 54; 66, 70), l'accumulateur présentant un logement d'accumulateur (10) dans lequel, au moyen d'une membrane de séparation (24), sont constituées deux chambres partielles (30, 34) pour recevoir du gaz et de l'eau non usée devant être séparés l'un de l'autre, caractérisé en ce qu'une autre membrane de séparation (22) est disposée dans le logement d'accumulateur (10) et délimite une autre chambre partielle (32) pour recevoir au moins un agent, en ce que la chambre partielle (30) enclose par les deux membranes de séparation (22, 24) sert à recevoir le gaz, et en ce que, dans une position de commutation du dispositif de soupapes (48; 52, 54; 66, 70), une chambre partielle (34) peut être remplie d'eau non usée qui peut être délivrée à la toilette (40) dans une autre position de commutation dans laquelle l'autre chambre partielle (32) reçoit simultanément l'agent respectif.

2. Système de chasse pour WC selon la revendication 1, caractérisé en ce que l'agent pouvant être respectivement reçu dans l'autre chambre partielle (32) est de l'eau eau non usée provenant de l'amenée d'eau non usée (44), de l'air comprimé provenant d'un équipement d'air comprimé (60) ou un fluide transporté par une pompe hydraulique (64), en particulier de l'huile hydraulique.

3. Système de chasse pour WC selon la revendication 1 ou 2, caractérisé en ce que la membrane de séparation (22, 24) respective est constituée en forme de coque et est raccordée, par son bord longitudinal (26) côté circonférence, au logement d'accumulateur (10) de façon étanche.

4. Système de chasse pour WC selon une des revendications 1 à 3, caractérisé en ce que des conduites (74) transportant le fluide débouchent, à une extrémité du logement d'accumulateur (10), dans les chambres partielles (32, 34) transportant le fluide qui sont raccordées à leur tour à leurs conduites (74) transportant le fluide, à l'autre extrémité du logement d'accumulateur (10), par le biais respectivement d'une ligne de désaération (76).

5. Système de chasse pour WC selon une des revendications 1 à 4, caractérisé en ce que, entre les membranes de séparation (22, 24) respectives et le logement d'accumulateur (10), il y a une paroi de limitation (90) ou couche de séparation rigide munie de passages.
